# EUROPÄISCHE PATENTANMELDUNG

(11) **EP 4 170 240 A1**
(43) Veröffentlichungstag der Anmeldung: **26.04.2023**
(21) Anmeldenummer: 22196920.7
(22) Anmeldetag: 21.09.2022
(51) Int. Cl.: F24C 3/14, F24B 1/20, F24B 1/191, A47J 37/07

(54) **BRENNSTOFFBETRIEBENES GARGERÄT FÜR DIE AUSSENVERWENDUNG**

(30) Priorität: 21.10.2021 DE 102021127322
(71) Anmelder: Miele & Cie. KG, 33332 Gütersloh (DE)
(72) Erfinder: Schmieder, Artem, 33335 Gütersloh (DE)

(57) **Zusammenfassung**

Die Erfindung betrifft ein brennstoffbetriebenes Gargerät (2) für die Außenverwendung, umfassend eine Brennervorrichtung (4) zur Verbrennung eines Brennstoffes und eine Gargeräteelektronik zur Steuerung des Gargeräts (2) und/oder als Benutzerschnittstelle, dadurch gekennzeichnet, dass das Gargerät (2) mindestens einen mit der Gargeräteelektronik stromleitend verbundenen thermoelektrischen Generator (6) aufweist, wobei der thermoelektrische Generator (6) zum einen mit der Brennervorrichtung (4) und zum anderen mit einer Kühlvorrichtung (8) jeweils derart in Wärmeübertragungsverbindung steht, dass die Gargeräteelektronik in einem Betriebszustand des Gargeräts (2), in dem die Brennervorrichtung (4) den Brennstoff verbrennt, mittels des thermoelektrischen Generators (6) mit Strom versorgbar ist.

## Beschreibung

Die Erfindung betrifft ein brennstoffbetriebenes Gargerät für die Außenverwendung der im Oberbegriff des Patentanspruchs 1 genannten Art.

Derartige brennstoffbetriebene Gargeräte für die Außenverwendung sind aus dem Stand der Technik bereits vorbekannt und umfassen eine Brennervorrichtung zur Verbrennung eines Brennstoffes und eine Gargeräteelektronik zur Steuerung des Gargeräts und/oder als Benutzerschnittstelle.

Der Erfindung stellt sich somit das Problem, ein brennstoffbetriebenes Gargerät für die Außenverwendung zu verbessern.

Erfindungsgemäß wird dieses Problem durch ein brennstoffbetriebenes Gargerät für die Außenverwendung mit den Merkmalen des Patentanspruchs 1 gelöst, das dadurch gekennzeichnet ist, dass das Gargerät mindestens einen mit der Gargeräteelektronik stromleitend verbundenen thermoelektrischen Generator aufweist, wobei der thermoelektrische Generator zum einen mit der Brennervorrichtung und zum anderen mit einer Kühlvorrichtung jeweils derart in Wärmeübertragungsverbindung steht, dass die Gargeräteelektronik in einem Betriebszustand des Gargeräts, in dem die Brennervorrichtung den Brennstoff verbrennt, mittels des thermoelektrischen Generators mit Strom versorgbar ist. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein brennstoffbetriebenes Gargerät für die Außenverwendung verbessert ist. Aufgrund der erfindungsgemäßen Ausbildung des brennstoffbetriebenen Gargeräts ist eine Stromversorgung der Geräteelektronik des Gargeräts auf einfache Art und Weise ermöglicht und wetterunabhängig gewährleistet. Entsprechend ist ein Betrieb des erfindungsgemäßen brennstoffbetriebenen Gargeräts auch unabhängig von einer leitungsgebundenen Stromversorgung im Gartenbereich oder dergleichen und auch bei für Solarbetrieb nicht ausreichender Sonneneinstrahlung ermöglicht.

Grundsätzlich ist das erfindungsgemäße brennstoffbetriebene Gargerät nach Art, Funktionsweise, Material und Dimensionierung in weiten geeigneten Grenzen frei wählbar. Beispielsweise ist es möglich, dass das erfindungsgemäße brennstoffbetriebene Gargerät als ein Gaskochfeld oder ein Gasgrill ausgebildet ist. Ferner ist das erfindungsgemäße brennstoffbetriebene Gargerät sowohl für Privathaushalte wie auch für eine gewerbliche Verwendung, also für den professionellen Einsatz, vorteilhaft einsetzbar.

Eine vorteilhafte Weiterbildung des erfindungsgemäßen brennstoffbetriebenen Gargeräts sieht vor, dass die Brennervorrichtung einen Stromerzeugungsabschnitt aufweist, wobei der thermoelektrische Generator lediglich in dem Stromerzeugungsabschnitt mit der Brennervorrichtung in Wärmeübertragungsverbindung, bevorzugt in Wärmeleitungsverbindung, steht, und wobei der Stromerzeugungsabschnitt von einem Rest der Brennervorrichtung zur Beheizung eines Garguts räumlich getrennt angeordnet ist. Hierdurch ist die Brennervorrichtung in einem Wärmeübertragungsbereich der Brennervorrichtung zur Wärmeübertragung an den thermoelektrischen Generator speziell auf die Erfordernisse dieser Wärmeübertragung anpassbar.

Eine weitere vorteilhafte Weiterbildung des erfindungsgemäßen brennstoffbetriebenen Gargeräts sieht vor, dass der thermoelektrische Generator mindestens eine Metallplatte aufweist, die mit einer mindestens gleich großen Metallplatte der Brennervorrichtung oder der Kühlvorrichtung in Wärmeleitungsverbindung steht, bevorzugt, dass die Metallplatte des thermoelektrischen Generators und/oder die Metallplatte der Brennervorrichtung oder der Kühlvorrichtung als eine Kupferplatte ausgebildet sind/ist. Auf diese Weise ist die als Wärmeleitung ausgebildete Wärmeübertragung von der Brennervorrichtung auf den thermoelektrischen Generator und/oder von dem thermoelektrischen Generator auf die Kühlvorrichtung wesentlich verbessert. Dies gilt insbesondere für die bevorzugte Ausführungsform dieser Weiterbildung.

Eine andere vorteilhafte Weiterbildung des erfindungsgemäßen brennstoffbetriebenen Gargeräts sieht vor, dass der thermoelektrische Generator zwischen der Brennervorrichtung und der Kühlvorrichtung angeordnet ist, bevorzugt, dass der thermoelektrische Generator mit einer parallel zu dessen Hauptausdehnung verlaufenden Seite an der Brennervorrichtung und mit einer dieser Seite gegenüberliegenden parallel zu dessen Hauptausdehnung verlaufenden Seite an der Kühlvorrichtung wärmeübertragend angeordnet ist. Hierdurch ist das erfindungsgemäße brennstoffbetriebene Gargerät auf konstruktiv und fertigungstechnisch besonders einfache Art und Weise realisierbar. Ferner ist dadurch ein sehr kompakter Aufbau des erfindungsgemäßen brennstoffbetriebenen Gargeräts ermöglicht.

Eine weitere vorteilhafte Weiterbildung des erfindungsgemäßen brennstoffbetriebenen Gargeräts sieht vor, dass die Kühlvorrichtung als eine Luftkühlung ausgebildet ist, bevorzugt, dass die Kühlvorrichtung eine Mehrzahl von Kühlrippen aufweist, die mittels Luft aus der freien Umgebung umströmbar sind. Auf diese Weise ist die Kühlvorrichtung konstruktiv und fertigungstechnisch sehr einfach umsetzbar. In anderen Ausführungsformen der Erfindung ist es jedoch auch denkbar, dass die Kühlvorrichtung als eine Wasserkühlung ausgebildet ist.

Darüber hinaus sind auch kombinierte Kühlkonzepte, also eine als Luft- und Wasserkühlung ausgebildete Kühlvorrichtung, möglich. Anstelle von Wasser sind auch andere dem Fachmann bekannte und für den jeweiligen Einzelfall geeignete fluide Kühlmittel einsetzbar.

Eine andere vorteilhafte Weiterbildung des erfindungsgemäßen brennstoffbetriebenen Gargeräts sieht vor, dass der thermoelektrische Generator mittels eines Spannungsreglers und/oder eines Spannungsboosters stromleitend mit der Gargeräteelektronik verbunden ist. Hierdurch ist der mittels des thermoelektrischen Generators erzeugte Strom auf die für die jeweilige Gargeräteelektronik erforderlichen Strom- und Spannungswerte anpassbar. Entsprechend können für andere Gargeräte bereits vorhandene Gargeräteelektroniken auch für das erfindungsgemäße brennstoffbetriebene Gargerät verwendet werden.

Eine weitere vorteilhafte Weiterbildung des erfindungsgemäßen brennstoffbetriebenen Gargeräts sieht vor, dass die Brennervorrichtung, bevorzugt der Stromerzeugungsabschnitt, in einem Wärmeübertragungsbereich der Brennervorrichtung mit dem thermoelektrischen Generator einen im Wesentlichen dreieckförmigen Querschnitt aufweist, wobei ein Bodenteil des Wärmeübertragungsbereichs Frischluftöffnungen zur Versorgung der Brennervorrichtung mit Luft aus der freien Umgebung und der Wärmeübertragungsbereich an einer dem Bodenteil gegenüberliegenden Kopfseite eine Abzugsöffnung zum Abzug von Verbrennungsgasen aufweist, und wobei mindestens ein Seitenteil von zwei Seitenteilen des Wärmeübertragungsbereichs zur Wärmeübertragungsverbindung mit dem thermoelektrischen Generator ausgebildet ist. Auf diese Weise ist eine für die Erzeugung von elektrischem Strom für die Gargeräteelektronik mittels des thermoelektrischen Generators konstruktiv und fertigungstechnisch besonders vorteilhafte Ausbildung des Wärmeübertragungsbereichs der Brennervorrichtung angegeben. Dies gilt insbesondere für die bevorzugte Ausführungsform dieser Weiterbildung.

Ferner sieht eine andere vorteilhafte Weiterbildung des erfindungsgemäßen brennstoffbetriebenen Gargeräts vor, dass das Gargerät als ein gasbetriebenes Gargerät ausgebildet ist und die Brennervorrichtung, bevorzugt der Wärmeübertragungsbereich, besonders bevorzugt der Stromerzeugungsabschnitt, eine Gasleitung mit einer Mehrzahl von Brenneröffnungen aufweist. Gasbetriebene Gargeräte sind insbesondere für die Außenverwendung besonders geeignet. Darüber hinaus ist die Brennervorrichtung gemäß der vorliegenden Weiterbildung besonders einfach und robust ausgebildet. Dies gilt besonders für die bevorzugte und insbesondere für die besonders bevorzugte Ausführungsform dieser Weiterbildung.

Ein Ausführungsbeispiel der Erfindung ist in den Zeichnungen rein schematisch dargestellt und wird nachfolgend näher beschrieben. Es zeigt
- Figur 1: ein Ausführungsbeispiel des erfindungsgemäßen brennstoffbetriebenen Gargeräts in einer perspektivischen Teilansicht, mit Blick auf den Wärmeübertragungsbereich des Stromerzeugungsabschnitts und
- Figur 2: das Ausführungsbeispiel gemäß der Fig. 1 in einer teilweisen Frontalansicht.

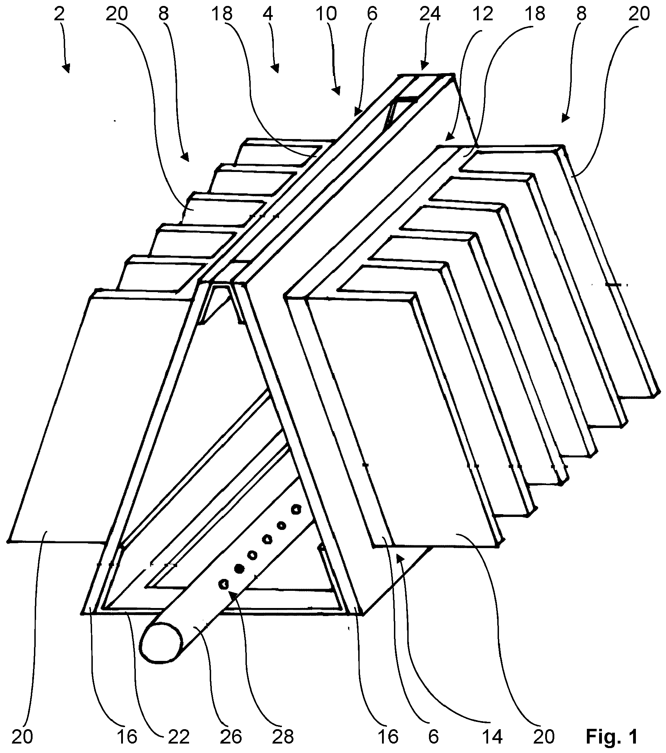

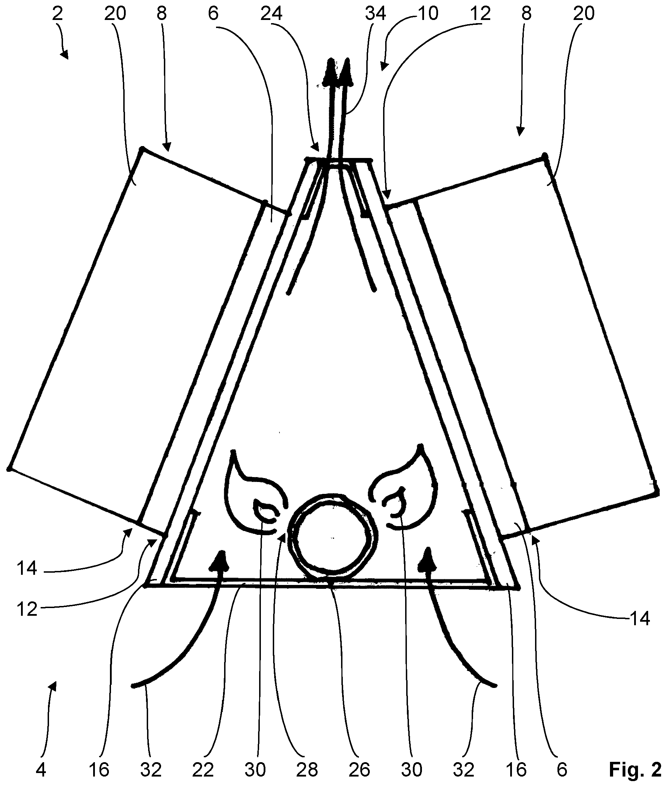

In den Fig. 1 und 2 ist ein Ausführungsbeispiel des erfindungsgemäßen brennstoffbetriebenen Gargeräts für die Außenverwendung rein exemplarisch dargestellt.

Das als Gasgrill ausgebildete Gargerät 2 umfasst eine Brennervorrichtung 4 zur Verbrennung eines nicht dargestellten und als Gas ausgebildeten Brennstoffes und eine nicht dargestellte Gargeräteelektronik zur Steuerung des Gargeräts 2 und/oder als Benutzerschnittstelle. Die Gargeräteelektronik dient beispielsweise zur Kommunikation zwischen dem Gargerät 2 und einem nicht dargestellten Benutzer des Gargeräts 2. Zum Beispiel können für einen Betrieb des Gargeräts 2 relevante Daten mittels der Gargeräteelektronik einerseits zur Steuerung des Gargeräts 2 verwendet und/oder andererseits zur Information oder Handlungsaufforderung an den Benutzer ausgegeben werden.

Das Gargerät 2 weist ferner zwei mit der Gargeräteelektronik stromleitend verbundene thermoelektrische Generatoren 6 auf, wobei der jeweilige thermoelektrische Generator 6 zum einen mit der Brennervorrichtung 4 und zum anderen mit einer Kühlvorrichtung 8 jeweils derart in Wärmeübertragungsverbindung steht, dass die Gargeräteelektronik in einem Betriebszustand des Gargeräts 2, in dem die Brennervorrichtung 4 den Brennstoff verbrennt, mittels der thermoelektrischen Generatoren 6 mit Strom versorgbar ist.

Die Brennervorrichtung 4 weist bei dem vorliegenden Ausführungsbeispiel einen Stromerzeugungsabschnitt 10 auf, wobei der jeweilige thermoelektrische Generator 6 lediglich in dem Stromerzeugungsabschnitt 10 mit der Brennervorrichtung 4 in Wärmeübertragungsverbindung, nämlich insbesondere in Wärmeleitungsverbindung, steht, und wobei der Stromerzeugungsabschnitt 10 von einem Rest der Brennervorrichtung 4 zur Beheizung eines Garguts räumlich getrennt angeordnet ist.

Der jeweilige thermoelektrische Generator 6 weist zwei als Kupferplatten ausgebildete Metallplatten 12, 14 auf, von denen die Metallplatte 12 mit einer größeren Metallplatte 16 der Brennervorrichtung 4 und von denen die Metallplatte 14 mit einer im Wesentlichen gleich großen Metallplatte 18 der Kühlvorrichtung 8 in Wärmeleitungsverbindung steht. Analog zu den Metallplatten 12, 14 sind die Metallplatten 16, 18 ebenfalls jeweils als eine Kupferplatte ausgebildet.

Der jeweilige thermoelektrische Generator 6 ist zwischen der Brennervorrichtung 4 und der jeweiligen Kühlvorrichtung 8 angeordnet, nämlich derart, dass der jeweilige thermoelektrische Generator 6 mit einer parallel zu dessen Hauptausdehnung verlaufenden Seite an der Brennervorrichtung 4 und mit einer dieser Seite gegenüberliegenden parallel zu dessen Hauptausdehnung verlaufenden Seite an der diesem zugeordneten Kühlvorrichtung 8 wärmeübertragend angeordnet ist.

Bei dem vorliegenden Ausführungsbeispiel ist die jeweilige Kühlvorrichtung 8 als eine Luftkühlung ausgebildet, wobei die jeweilige Kühlvorrichtung 8 eine Mehrzahl von Kühlrippen 20 aufweist, die mittels nicht dargestellter Luft aus der freien Umgebung umströmbar sind.

Der jeweilige thermoelektrische Generator 6 ist mittels eines nicht dargestellten Spannungsreglers und/oder eines nicht dargestellten Spannungsboosters stromleitend mit der Gargeräteelektronik verbunden.

Konkret weist die Brennervorrichtung 4, nämlich der Stromerzeugungsabschnitt 10 der Brennervorrichtung 4, in einem Wärmeübertragungsbereich der Brennervorrichtung 4 mit dem jeweiligen thermoelektrischen Generator 6 einen im Wesentlichen dreieckförmigen Querschnitt auf, wobei ein Bodenteil 22 des Wärmeübertragungsbereichs nicht dargestellte Frischluftöffnungen zur Versorgung der Brennervorrichtung 4 mit Luft aus der freien Umgebung und der Wärmeübertragungsbereich an einer dem Bodenteil 22 gegenüberliegenden Kopfseite eine Abzugsöffnung 24 zum Abzug von Verbrennungsgasen aufweist, und wobei zwei Seitenteile des Wärmeübertragungsbereichs, nämlich die beiden Metallplatten 16, zur Wärmeübertragungsverbindung mit den thermoelektrischen Generatoren 6 ausgebildet sind.

Darüber hinaus weist die Brennervorrichtung 4 des gasbetriebenen Gargeräts 2, nämlich der Stromerzeugungsabschnitt 10 der Brennervorrichtung 4, eine Gasleitung 26 mit einer Mehrzahl von Brenneröffnungen 28 auf.

Nachfolgend wird die Funktionsweise des erfindungsgemäßen brennstoffbetriebenen Gargeräts für die Außenverwendung gemäß dem vorliegenden Ausführungsbeispiel anhand der Fig. 1 und 2 näher erläutert.

Zunächst befindet sich das Gargerät 2 in einem Nichtbetriebszustand; die Brennervorrichtung 4 ist also ausgeschaltet.

Zwecks Durchführung eines Garvorgangs mittels des Gargeräts 2 wird das Gargerät 2 in dessen Betriebszustand überführt, wobei ein nicht dargestellter Gaszufluss zu der Gasleitung 26 geöffnet wird und anschließend das aus den Brenneröffnungen 28 der Gasleitung 26 ausströmende Gas manuell oder halbautomatisch gezündet wird. Gasflammen 30 sind in der Fig. 2 dargestellt.

Während der Verbrennung des brennbaren Gases entsteht in dem Stromerzeugungsabschnitt 10 der Brennervorrichtung 4 ein sogenannter Kamineffekt, so dass mittels der Frischluftöffnungen in dem Bodenteil 22 Luft aus der Umgebung automatisch angesaugt wird. Die bei der Verbrennung entstehenden Verbrennungsgase steigen nach oben auf und können mittels der Abzugsöffnung 24 aus dem Stromerzeugungsabschnitt 10 in die freie Umgebung entweichen. Die aus der freien Umgebung mittels der Frischluftöffnungen des Bodenteils 22 in den Stromerzeugungsabschnitt 10 einströmende Frischluft ist mit Strömungspfeilen 32 und die aus dem Stromerzeugungsabschnitt 10 in die freie Umgebung ausströmenden Verbrennungsgase sind mit Strömungspfeilen 34 symbolisiert. Die sich aufgrund des vorgenannten Verbrennungsprozesses erwärmenden Metallplatten 16 erwärmen die Metallplatten 12 der thermoelektrischen Generatoren 6. Gleichzeitig werden die Kühlrippen 20 der Kühlvorrichtungen 8 von im Vergleich zu der Metallplatte 18 der jeweiligen Kühlvorrichtung 8 kühlerer Luft aus der freien Umgebung umströmt, so dass Wärme von den Metallplatten 18 mittels der Kühlrippen 20 an die freie Umgebung abgegeben wird. Entsprechend werden die Metallplatten 14 gekühlt. Zwischen den Metallplatten 12 und den Metallplatten 14 der thermoelektrischen Generatoren 6 entsteht ein Temperaturgefälle, so dass mittels dieses Temperaturgefälles in den thermoelektrischen Generatoren 6 ein elektrischer Strom erzeugt wird. Dieser elektrische Strom wird mittels des Spannungsreglers und/oder des Spannungsboosters dann derart transformiert, dass mittels des auf die vorgenannte Art und Weise erzeugten Stroms die Gargeräteelektronik betrieben werden kann. Die Gargeräteelektronik kann zum einen zur Steuerung des Gargeräts 2 und/oder zum anderen als Benutzerschnittstelle, also zur Information des Benutzers beispielsweise über Gargerätparameter des Gargeräts 2 und/oder zur Eingabe von Benutzerbefehlen zur Steuerung des Gargeräts 2 verwendet werden.

Die Erfindung ist nicht auf das vorliegende Ausführungsbeispiel beschränkt. Siehe hierzu beispielsweise die diesbezüglichen Ausführungen in der Beschreibungseinleitung.

## Patentansprüche

1. Brennstoffbetriebenes Gargerät (2) für die Außenverwendung, umfassend eine Brennervorrichtung (4) zur Verbrennung eines Brennstoffes und eine Gargeräteelektronik zur Steuerung des Gargeräts (2) und/oder als Benutzerschnittstelle, **dadurch gekennzeichnet, dass** das Gargerät (2) mindestens einen mit der Gargeräteelektronik stromleitend verbundenen thermoelektrischen Generator (6) aufweist, wobei der thermoelektrische Generator (6) zum einen mit der Brennervorrichtung (4) und zum anderen mit einer Kühlvorrichtung (8) jeweils derart in Wärmeübertragungsverbindung steht, dass die Gargeräteelektronik in einem Betriebszustand des Gargeräts (2), in dem die Brennervorrichtung (4) den Brennstoff verbrennt, mittels des thermoelektrischen Generators (6) mit Strom versorgbar ist.

2. Brennstoffbetriebenes Gargerät (2) nach Anspruch 1, **dadurch gekennzeichnet, dass** die Brennervorrichtung (4) einen Stromerzeugungsabschnitt (10) aufweist, wobei der thermoelektrische Generator (6) lediglich in dem Stromerzeugungsabschnitt (10) mit der Brennervorrichtung (4) in Wärmeübertragungsverbindung, bevorzugt in Wärmeleitungsverbindung, steht, und wobei der Stromerzeugungsabschnitt (10) von einem Rest der Brennervorrichtung (4) zur Beheizung eines Garguts räumlich getrennt angeordnet ist.

3. Brennstoffbetriebenes Gargerät (2) nach Anspruch 1 oder 2, **dadurch gekennzeichnet, dass** der thermoelektrische Generator (6) mindestens eine Metallplatte (12, 14) aufweist, die mit einer mindestens gleich großen Metallplatte (16, 18) der Brennervorrichtung (4) oder der Kühlvorrichtung (8) in Wärmeleitungsverbindung steht, bevorzugt, dass die Metallplatte (12, 14) des thermoelektrischen Generators (6) und/oder die Metallplatte (16, 18) der Brennervorrichtung (4) oder der Kühlvorrichtung (8) als eine Kupferplatte ausgebildet sind/ist.

4. Brennstoffbetriebenes Gargerät (2) nach einem der Ansprüche 1 bis 3, **dadurch gekennzeichnet, dass** der thermoelektrische Generator (6) zwischen der Brennervorrichtung (4) und der Kühlvorrichtung (8) angeordnet ist, bevorzugt, dass der thermoelektrische Generator (6) mit einer parallel zu dessen Hauptausdehnung verlaufenden Seite an der Brennervorrichtung (4) und mit einer dieser Seite gegenüberliegenden parallel zu dessen Hauptausdehnung verlaufenden Seite an der Kühlvorrichtung (8) wärmeübertragend angeordnet ist.

5. Brennstoffbetriebenes Gargerät (2) nach einem der Ansprüche 1 bis 4, **dadurch gekennzeichnet, dass** die Kühlvorrichtung (8) als eine Luftkühlung ausgebildet ist, bevorzugt, dass die Kühlvorrichtung (8) eine Mehrzahl von Kühlrippen (20) aufweist, die mittels Luft aus der freien Umgebung umströmbar sind.

6. Brennstoffbetriebenes Gargerät (2) nach einem der Ansprüche 1 bis 5, **dadurch gekennzeichnet, dass** der thermoelektrische Generator (6) mittels eines Spannungsreglers und/oder eines Spannungsboosters stromleitend mit der Gargeräteelektronik verbunden ist.

7. Brennstoffbetriebenes Gargerät (2) nach einem der Ansprüche 1 bis 6, **dadurch gekennzeichnet, dass** die Brennervorrichtung (4), bevorzugt der Stromerzeugungsabschnitt (10), in einem Wärmeübertragungsbereich der Brennervorrichtung (4) mit dem thermoelektrischen Generator (6) einen im Wesentlichen dreieckförmigen Querschnitt aufweist, wobei ein Bodenteil (22) des Wärmeübertragungsbereichs Frischluftöffnungen zur Versorgung der Brennervorrichtung (4) mit Luft aus der freien Umgebung und der Wärmeübertragungsbereich an einer dem Bodenteil (22) gegenüberliegenden Kopfseite eine Abzugsöffnung (24) zum Abzug von Verbrennungsgasen aufweist, und wobei mindestens ein Seitenteil (16) von zwei Seitenteilen (16) des Wärmeübertragungsbereichs zur Wärmeübertragungsverbindung mit dem thermoelektrischen Generator (6) ausgebildet ist.

8. Brennstoffbetriebenes Gargerät (2) nach einem der Ansprüche 1 bis 7, **dadurch gekennzeichnet, dass** das Gargerät (2) als ein gasbetriebenes Gargerät (2) ausgebildet ist und die Brennervorrichtung (4), bevorzugt der Wärmeübertragungsbereich, besonders bevorzugt der Stromerzeugungsabschnitt (10), eine Gasleitung (26) mit einer Mehrzahl von Brenneröffnungen (28) aufweist.
